# FASCICULE DE BREVET EUROPEEN

(11) **EP 1 648 843 B1**
(45) Date de publication et mention de la délivrance du brevet: **13.06.2012**
(21) Numéro de dépôt: 04767806.5
(22) Date de dépôt: 28.07.2004
(51) Int. Cl.: C05F 9/02, B01F 7/00, B01F 7/18, B01F 15/00

(54) **Dispositif mélangeur pour déchets solides divisés**
Mischgerät für getrennten Festmüll
Mixer device for divided solid waste

(30) Priorité: 30.07.2003 FR 0309381
(43) Date de publication de la demande: 26.04.2006
(73) Titulaire: Syndicat Intercommunal pour la Valorisation & l'Elimination des Dechets du Centre Ouest Var, 83136 Neoules (FR)
(72) Inventeur: RIDELLE-BERGER, Jean, F-83170 Brignoles (FR)
(74) Mandataire: Oudin, Stéphane
(86) Numéro de dépôt international: PCT/FR2004/002025
(87) Numéro de publication internationale: WO 2005/011853

(56) Documents cités:
- EP-A- 1 264 644
- DE-A- 2 702 795
- DE-A- 2 712 124
- DE-A- 10 013 266
- US-A- 4 741 122
- DATABASE WPI Section Ch, Week 199827 Derwent Publications Ltd., London, GB; Class C04, AN 1998-300831 XP002276277 & JP 09 227262 A ((IGAR-N) IGARASHI KOGYO KK) 2 septembre 1997 (1997-09-02)
- PATENT ABSTRACTS OF JAPAN vol. 1998, no. 10, 31 août 1998 (1998-08-31) & JP 10 130082 A (HITACHI LTD), 19 mai 1998 (1998-05-19)

## Description

La présente invention concerne un dispositif mélangeur pour matières, notamment constituées de déchets et solides divers divisés, applicable particulièrement à la mise en oeuvre de processus, tels que la transformation de solides divisés, la fabrication de matériaux de type compost, la fermentation aérobie, ou anaérobie, le séchage etc... Elle a également pour objet un procédé de mise en oeuvre d'un tel dispositif.

On sait que dans de nombreux processus industriels et notamment dans le domaine du génie chimique, les échanges et transferts divers sont fortement améliorés par la mise en oeuvre au sein de réacteurs de systèmes capables de mélanger ou d'agiter la matière en réaction. Dans ces réacteurs on fait souvent appel à des agitateurs à palettes.

Cependant lorsque la matière que l'on souhaite soumettre à agitation comprend une partie importante de phases solides, ces moyens d'agitation se révèlent inappropriés, notamment en raison des effets hydrodynamiques qui restent limités aux environs de l'agitateur et de l'importance du couple nécessaire pour mettre en mouvement cette phase solide.

On a également proposé de monter le réacteur sur un axe horizontal ou incliné, et d'assurer une rotation de celui-ci autour de cet axe. De tels dispositifs restent cependant d'une mise en oeuvre lourde et donc onéreuse, et rendent délicate la connexion avec des organes extérieurs. De plus, ils sont difficilement utilisables dans le cas de mélanges portant sur des quantités importantes de matière.

Lorsque la matière à mélanger est constituée de différentes phases solides, on sait qu'en raison notamment de la gravité, la matière se tasse dans le fond du réacteur, si bien que l'homogénéité de la phase solide est difficile à assurer et qu'il s'ensuit la création de zones à l'intérieur de ces réacteurs qui évoluent chacune à leur rythme propre, produisant finalement des lots de matière différemment transformés.

On sait par ailleurs que, lors de la transformation de solides divisés, il est fréquent que la matière comporte des agrégats soit existant à l'origine soit provenant d'une formation progressive, soit sous l'effet de réactions chimiques ou biochimiques qui libèrent de nouvelles substances, soit du fait de l'ajout d'une phase liquide visant à favoriser ou à provoquer les réactions recherchées. Briser de tels agrégats est une opération difficile.

On a proposé divers systèmes applicables au traitement des matières solides divisées comprenant également des phases liquides, voire gazeuses, et comportant des agrégats de matières.

On a ainsi proposé d'extraire la matière solide du réacteur, à l'aide par exemple de dispositifs à godets, de pelles ou de vis sans fin, de retourner ensuite cette matière afin de la fragmenter par des moyens appropriés, pour la recharger ensuite dans le réacteur. Ce type de manipulation c'est avéré très lourd de mise en oeuvre sans, de plus, assurer une véritable homogénéisation de la matière.

On a également proposé des dispositifs de malaxage dits «contre rotatifs» qui sont essentiellement constitués de deux organes de mélange coaxiaux disposés dans un réacteur cylindrique d'axe vertical, à savoir un organe de raclage disposé en périphérie du réacteur et un organe central constitué de trois hélices superposées, ces deux organes étant affectés de sens de rotation opposés de façon à soumettre la matière à mélanger à un effort de cisaillement permettant de briser les agrégats. Un tel dispositif est cependant complexe, si bien qu'il est lourd à gérer aussi bien sur le plan des investissements que sur celui du fonctionnement.

Par ailleurs, le document US 4,741,122 décrit un appareillage destiné à réaliser une préparation stérile ou partiellement stérile, l'inoculation et la mise en sachet de substrats de champignons. Le document DE 100 13 266 décrit une tour de compostage constituée d'une enceinte cylindrique au centre de laquelle est disposée une vis sans fin rotative.

Ces deux documents ne décrivent pas de moyens aptes à soulever la matière et à la libérer.

La présente invention a pour but de proposer un dispositif mélangeur qui assure non seulement une distribution régulière de la matière mais qui permette de plus de briser les agrégats de celle-ci.

La présente invention a ainsi pour objet un dispositif mélangeur pour matières, notamment constituées de déchets solides divers divisés, dans un silo vertical, caractérisé en ce qu'il comporte :
- une zone centrale de travail s'étendant sur toute la hauteur du silo et une zone périphérique,
- des moyens distribués verticalement à différents niveaux successifs de la zone de travail, sur toute la hauteur du silo, aptes à soulever la matière à partir de chacun des niveaux de la zone de travail et à la libérer,
- des moyens aptes à amener la matière de la partie supérieure de la zone périphérique à la partie centrale inférieure du silo.

Le silo et la zone de travail pourront avoir la forme d'un cylindre, la zone de travail étant coaxiale au silo. Les moyens souleveurs pourront être constitués d'un arbre vertical se confondant avec l'axe du silo, qui sera animé d'un mouvement de rotation, et qui sera pourvu, à chacun desdits niveaux, d'au moins une palette dont le rayon définira celui de la zone de travail et qui présentera un angle d'incidence par rapport au plan de la section droite du silo, cette palette étant inclinée du bas vers le haut et du côté vers lequel l'amène le mouvement de rotation vers l'opposé de celui-ci. Cet angle d'incidence pourra éventuellement être ajustable.

La vitesse de rotation de l'arbre sera relativement faible, à savoir de l'ordre de cinq à dix tours par minute.

Préférentiellement les palettes seront constituées d'éléments plans en forme de secteurs, d'angle au centre compris entre 20 et 120° et leur dimension, dans le sens radial, sera sensiblement comprise entre le cinquième et le tiers du rayon du silo.

Dans un mode de mise en oeuvre intéressant de l'invention l'arbre sera pourvu d'une seule palette par niveau et les palettes de deux niveaux successifs seront décalées angulairement l'une par rapport à l'autre d'un angle d'environ 90°.

Les moyens aptes à amener la matière des différents niveaux situés en périphérie du silo vers la partie centrale inférieure de celui-ci pourront être de type statique et seront alors notamment constitués d'un fond de forme tronconique. Ces moyens pourront également être de type dynamique et être alors constitués par exemple d'éléments racleurs solidaires de l'arbre rotatif qui seront appliqués sur la paroi interne de la base du silo.

Le silo pourra comporter des moyens de chargement par sa partie supérieure, constitués par exemple par une trappe, et/ou par sa partie inférieure et seront alors constitués par exemple par une vis sans fin. Cette vis sans fin présentant l'avantage, si l'on inverse son sens de rotation, de faire également office de moyens de déchargement.

Le silo pourra être utilisé en tant que réacteur afin d'y mettre en oeuvre un processus de traitement physique et/ou chimique, tel que par exemple un processus de fabrication de compost, et comportera alors à cet effet des moyens d'alimentation et/ou d'extraction de fluides ainsi que des moyens permettant d'assurer le chauffage de son contenu. Il pourra alors comporter des moyens d'isolation thermique à l'égard de l'extérieur.

La présente invention a également pour objet un procédé pour assurer le mélange de matières notamment constituées de déchets solides divers divisés, dans un silo vertical, caractérisé en ce qu'il comporte les étapes consistant à :
- soulever la matière à partir de différents niveaux successifs d'une zone centrale du silo, et à la libérer,
- amener la matière de la partie supérieure de la zone périphérique du silo à la partie centrale inférieure de celui-ci.

On décrira ci-après, à titre d'exemple non limitatif, des formes d'exécution de la présente invention, en référence aux dessins annexés sur lesquels :
La figure 1 est une vue schématique en coupe axiale et verticale d'un dispositif mélangeur suivant la présente invention.
La figure 2 est une vue en plan verticale d'un arbre équipé d'une palette utilisée dans le mode de mise en oeuvre de l'invention représentée à la figure 1.
La figure 3 est une vue de face de la palette représentée sur la figure 2.
La figure 4 est une vue en plan de la palette représentée sur les figures 2 et 3.

Dans le mode de mise en oeuvre de l'invention représenté sur les figures, le dispositif mélangeur est constitué d'un réacteur cylindrique 1 de section droite circulaire et de rayon R, qui se termine à sa base par une partie tronconique 1ₐ.

Le réacteur 1 est traversé axialement par un arbre 3, qui repose à sa base sur un palier 4 et est solidaire à son extrémité supérieure d'un moteur 5 fixé dans la paroi supérieure 7 du réacteur 1 et qui assure son entraînement en rotation à une faible vitesse, préférentiellement comprise entre 5 et 10 tours par minute.

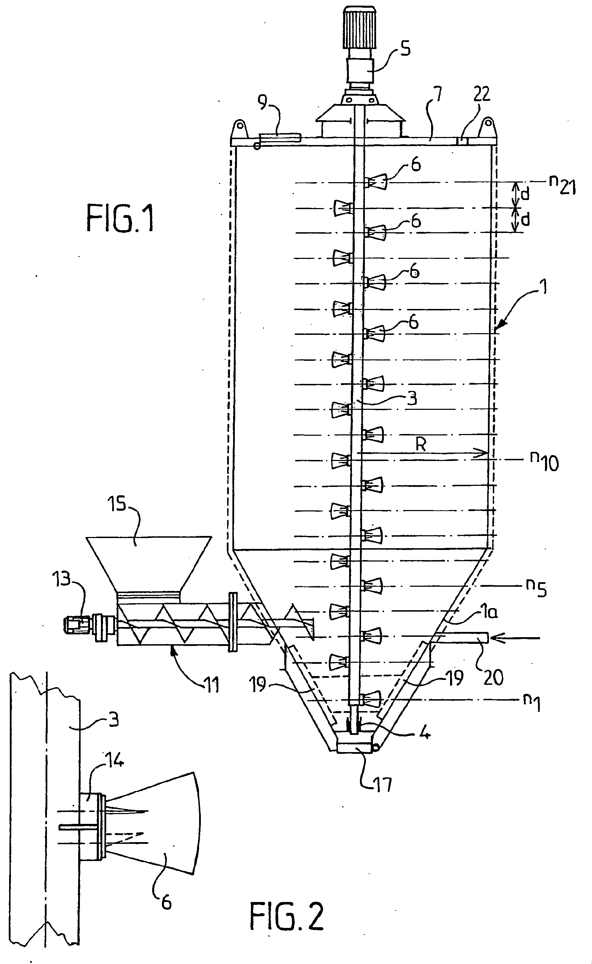

L'arbre 3 est pourvu de palettes 6 qui sont disposées de proche en proche sur toute sa hauteur sur différents niveaux, qui sont espacés les uns des autres d'une distance d sensiblement égale à environ 1/5 du rayon R du réacteur 1. Dans le mode de mise en oeuvre représenté sur la figure 1 le réacteur est ainsi séparé en vingt et un niveaux n₁, n₂, n₃ ... n₂₁ auxquels correspondent les palettes 6 associées. L'arbre 3 est pourvu d'une seule palette 6 par niveau et les palettes de deux niveaux successifs sont décalées angulairement l'un par rapport à l'autre d'un angle d'environ 90°.

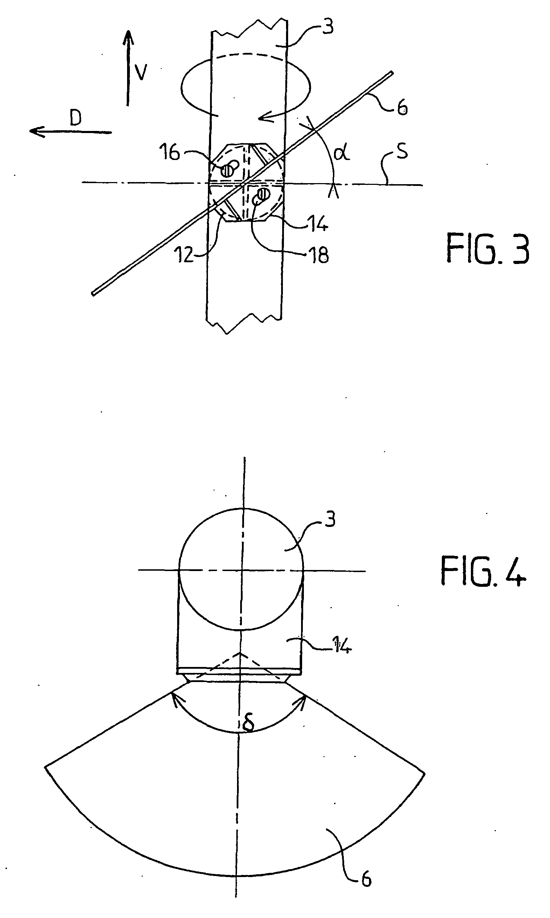

Ces palettes 6, dont l'une est représentée en plan sur la figure 4, sont sensiblement en forme de secteur dont l'angle au centre δ peut être compris entre 20 et 120° et préférentiellement entre 80 et 120° et ont un rayon r préférablement compris entre le cinquième et le tiers du rayon R du réacteur 1. Les palettes 6 sont pourvues d'une certaine incidence, c'est-à-dire qu'elles sont inclinées d'un angle α pouvant être compris entre environ 10 et 35° par rapport à la section droite S du réacteur.

Les palettes 6 sont solidarisées de l'arbre 3 par l'intermédiaire d'éléments de fixation qui sont constitués d'un socle 12 soudé sur l'arbre 3 et d'une coiffe 14 qui vient recouvrir celui-ci et sur laquelle chaque palette 6 est soudée. La fixation de la coiffe 14 sur le socle 12 est assurée par deux vis 16 qui traversent deux trous 18 en arc de cercle de la coiffe 14, pour se visser dans le socle 12, ce qui permet d'ajuster l'angle d'incidence α.

Les palettes 6 sont inclinées du bas vers le haut et du côté vers lequel les amène le mouvement de rotation D, vers l'opposé de celui-ci (ainsi que représenté sur la figure 3) si bien que, lors de cette rotation, la matière est soulevée par les palettes, glisse sur celles-ci, pour retomber dès qu'elle dépasse leur arête supérieure 6ₐ. Il en résulte un double effet.

Un premier effet est la désagrégation des agrégats de matière qui existent d'origine ou qui ont tendance à se former suite à la compression de cette matière ou aux diverses réactions susceptibles de se créer à l'intérieur du réacteur. Un second effet est la remontée de la matière dans la zone de travail du silo.

En effet, au cours de leur rotation dans la matière, les palettes créent un sillage formant un volume vide de matière, qui commence à se combler dès après leur passage, par de la matière qui provient en partie de la zone périphérique, si bien que la matière soulevée par les palettes et qui retombe dans le sillage de celles-ci vient alors se superposer à la matière provenant de la zone périphérique d'où une élévation progressive de cette matière dans la zone de travail. Dans le même temps la matière de la zone supérieure du silo retombe, par la zone périphérique, vers la base de celui-ci. On crée ainsi une sorte de mouvement de convexion.

Le silo peut être alimenté en matières par une trappe 9 prévue dans sa paroi supérieure 7 et/ou par sa base 1a au moyen d'un système à vis sans fin 11. Cette dernière est entraînée en rotation par un moteur 13 et est alimentée en matières à mélanger par une trémie 15. L'extraction de la matière après son mélange, et éventuellement son traitement, peut être assurée par la base du réacteur 1 au moyen d'une trappe d'évacuation 17. Cette extraction peut également être effectuée par le système à vis sans fin 11 par une simple inversion de son sens de rotation.

Le fond 1a du réacteur 1 peut comporter un racloir, qui est représenté en traits pointillés sur la figure 1, et qui est destiné à éviter que la matière n'adhère de façon durable au fond du réacteur 1 et s'y entasse, perturbant ainsi la bonne circulation de la matière dans la zone périphérique du réacteur. Ce racloir est constitué de deux bras 19 solidaires de l'arbre 3 qui, lorsque celui-ci est en rotation, repoussent la matière de la périphérie vers le centre du réacteur 1.

La base 1a du réacteur 1 peut comporter une grille destinée à permettre l'écoulement de liquides. Il peut également comporter des moyens 20 d'alimentation en gaz, notamment de l'air, par exemple en légère surpression auxquels est associé, dans la paroi supérieure 7 du silo, un orifice 22 d'évacuation permettant de créer à l'intérieur de celui-ci une circulation de ce gaz.

Après avoir mis en rotation l'arbre 3 on procède au chargement du réacteur 1 à partir de la trappe supérieure 9, cette mise en rotation préalable des palettes 6 évite ainsi tout tassement de la matière. Lorsque le réacteur est utilisé, en plus de sa fonction de mélange de matière, pour réaliser un certain processus de traitement, par exemple pour réaliser du compost à partir de matières constituées notamment de déchets verts, de déchets alimentaires, de déjections animales, de déchets de bois etc... on peut injecter dans celui-ci des liquides, des gaz, et même des solides. On peut notamment, dans le cas de réalisation de compost, injecter à partir du dispositif à vis sans fin 11 des déchets verts, de la paille, etc... à la base même du réacteur c'est-à-dire là où les boues sont davantage liquides, ce qui permet encore d'assurer une meilleure homogénéisation de la matière.

Ainsi donc suivant l'invention, le mouvement de rotation des palettes 6 s'effectuant à différents niveaux du réacteur le mouvement de convexion ainsi généré dans celui-ci provoque à la fois respectivement un mélange local de la matière et une homogénéisation de l'ensemble de celle-ci, dans la mesure où chaque «grain de solide divisé» parcoure de façon statistique l'ensemble du réacteur.

On pourrait bien entendu donner aux palettes 6, qui sont de forme plane dans le mode de mise en oeuvre précédemment décrit, des formes différentes y compris des formes en hélice de façon à éventuellement améliorer le mouvement de "soulèvement" de la matière effectué par les palettes.

On pourrait également suivant l'invention assurer par d'autres moyens les mouvement de la matière réalisés, dans le mode de mise en oeuvre précédemment décrit avec des palettes.

Le réacteur, notamment lorsqu'il assure une fonction en sus de celle de mélangeur, peut être avantageusement muni de dispositifs d'introduction de liquides ou de gaz en cours de fonctionnement. Ces dispositifs pourront être de simples orifices prévus dans la paroi du réacteur, raccordés par des tuyaux à des systèmes d'alimentation en liquide ou de soufflage de gaz. Les dispositifs d'introduction de liquide ou de gaz peuvent préférablement être des distributeurs tels que des assemblages de tuyaux percés, de faible diamètre, ou de plaques diffusantes percées de fins trous. Une injection, notamment de gaz, pourra être réalisée également au moyen de l'arbre 3, si celui-ci est creux. L'arbre 3 sera alors raccordé au système d'alimentation en liquide ou en gaz et sera pourvu de petits orifices disposés préalablement sur toute sa hauteur de façon à permettre une diffusion du gaz ou du liquide au sein de la masse de matière.

Bien évidemment, les liquides ou gaz introduits peuvent être préalablement chauffés avant leur introduction, de façon à créer des échanges thermiques propices aux transformations désirées.

Pour la mise en oeuvre de réactions à une certaine température, il pourra être intéressant de chauffer le réacteur. A cette fin, celui-ci pourra avantageusement comporter une double coque dans l'inter-espace de laquelle des moyens de chauffage seront disposés. On pourra également envoyer dans cet inter-espace de l'air chaud, ou disposer dans celui-ci des résistances électriques positionnées préférentiellement contre la paroi interne.

Alternativement, les moyens de chauffage peuvent être installés directement dans le silo.

## Revendications

1. Dispositif mélangeur pour matières, notamment constituées de déchets solides divers divisés, dans un silo (1) vertical, **caractérisé en ce qu'**il comporte :
- une zone centrale de travail s'étendant sur toute la hauteur du silo (1) et une zone périphérique,
- des moyens (6) distribués verticalement à différents niveaux successifs (n₁, n₂, n₃ ... n₂₁) de la zone de travail, sur toute la hauteur du silo (1), aptes à soulever la matière à partir de chacun des niveaux de la zone de travail et à la libérer,
- des moyens (1a,19) aptes à amener la matière de la partie supérieure de la zone périphérique à la partie centrale inférieure du silo (1).

2. Dispositif selon la revendication 1, **caractérisé en ce que** le silo (1) est en forme de cylindre, et la zone de travail à également la forme d'un cylindre coaxial au silo, les moyens souleveurs sont constitués d'un arbre vertical (3) qui se confond avec l'axe du silo (1), qui est animé d'un mouvement de rotation, et qui est pourvu, à chacun desdits niveaux, d'au moins une palette (6) dont le rayon (r) définit celui de la zone de travail et qui présente un angle d'incidence (α) par rapport au plan de la section droite (S) du silo, cette palette (6) étant inclinée du bas vers le haut et du côté vers lequel l'amène le mouvement de rotation vers l'opposé de celui-ci.

3. Dispositif selon la revendication 2, **caractérisé en ce que** la vitesse de rotation de l'arbre (3) est de l'ordre de cinq à dix tours par minute.

4. Dispositif suivant l'une des revendications précédentes **caractérisé en ce que** les palettes (6) sont constituées d'éléments plans en forme de secteurs, d'angle au centre (δ) compris entre 20 et 120°.

5. Dispositif suivant l'une des revendications 2 à 4 **caractérisé en ce que** l'angle d'incidence (α) des palettes (6) est de type ajustable.

6. Dispositif suivant l'une des revendications 2 à 5 **caractérisé en ce que** la dimension, dans le sens radial, d'une palette (6) est sensiblement comprise entre le cinquième et le tiers du rayon (R) du silo.

7. Dispositif suivant l'une des revendications 2 à 6 **caractérisé en ce que** l'arbre (3) est pourvu d'une seule palette (6) par niveau et les palettes (6) de deux niveaux successifs sont décalées angulairement l'une par rapport à l'autre d'un angle d'environ 90°.

8. Dispositif suivant l'une des revendications précédentes **caractérisé en ce que** les moyens aptes à amener la matière de la partie supérieure de la zone périphérique à la partie centrale inférieure du silo (1) sont de type statique et sont constitués d'un fond (1a) de forme tronconique.

9. Dispositif suivant l'une des revendications 1 à 7 **caractérisé en ce que** les moyens aptes à amener la matière de la partie supérieure de la zone périphérique à la partie centrale inférieure du silo (1) sont de type dynamique et sont constitués d'éléments racleurs (19) solidaires de l'arbre rotatif (3), qui sont appliqués sur la paroi interne de la base (1a) du silo (1).

10. Dispositif suivant l'une des revendications précédentes **caractérisé en ce que** le silo (1) comporte des moyens de chargement (9) par sa partie supérieure.

11. Dispositif suivant l'une des revendications 1 à 9 **caractérisé en ce que** le silo (1) comporte des moyens de chargement par sa partie inférieure, constitués notamment d'une vis sans fin (11).

12. Dispositif suivant la revendication 11 **caractérisé en ce que** les moyens de chargement peuvent également faire office de moyens de déchargement.

13. Dispositif suivant l'une des revendications précédentes **caractérisé en ce que** le silo (1) est pourvu de moyens d'isolation thermique à l'égard de l'extérieur.

14. Dispositif suivant la revendication 13 **caractérisé en ce que** le silo (1) est pourvu de moyens de chauffage.

15. Dispositif suivant l'une des revendications précédentes **caractérisé en ce que** le silo (1) comporte des moyens d'introduction (20) et/ou d'extraction de fluides.

16. Procédé pour assurer le mélange de matières notamment constituées de déchets solides divers divisés, dans un silo (1) vertical, **caractérisé en ce qu'**il comporte les étapes consistant à :
- soulever la matière à partir de différents niveaux successifs (n₁, n₂, n₃ ... n₂₁) d'une zone centrale du silo (1), et à la libérer,
- amener la matière de la partie supérieure de la zone périphérique du silo à la partie centrale inférieure de celui-ci.

17. Procédé suivant la revendication 16 **caractérisé en ce que** l'on utilise le silo en tant que réacteur (1) afin d'y mettre en oeuvre au moins un processus de traitement physique et/ou chimique.

18. Procédé suivant la revendication 17 **caractérisé en ce que** le processus est un processus de fabrication de compost.

## Claims

1. A mixer device for materials, notably consisting of various divided solid wastes, in a vertical silo (1), **characterized in that** it includes:
- a central working area extending over the whole of the height of the silo (1) and a peripheral area,
- means (6) vertically distributed at different successive levels (n₁, n₂, n₃... n₂₁) of the working area, over the whole height of the silo (1), capable of lifting the material from each of the levels of the working area and of releasing it,
- means (1a, 19) capable of bringing the material from the upper portion of the peripheral area to the lower central portion of the silo (1).

2. The device according to claim 1, **characterized in that** the silo (1) is in the shape of a cylinder, and the working area also has the shape of a cylinder coaxial with the silo, the lifting means consist of a vertical shaft (3), which coincides with the axis of the silo (1), which performs a movement of rotation, and which is provided, at each of said levels, with at least one pallet (6), the radius (r) of which defines that of the working area and which has an angle of incidence (α) relatively to the plane of the cross-section (S) of the silo, this pallet (6) being tilted from the bottom towards the top and on the side towards which the movement of rotation brings it towards the opposite of the latter.

3. The device according to claim 2, **characterized in that** the speed of rotation of the shaft (3) is of the order of 5 to 10 revolutions per minute.

4. The device according to one of the preceding claims, **characterized in that** the pallets (6) consist of sector-shaped planar elements, with an angle at the centre (δ) comprised between 20 and 120°.

5. The device according to one of claims 2 to 4, **characterized in that** the angle of incidence (α) of the pallets (6) are of the adjustable type.

6. The device according to one of claims 2 to 5, **characterized in that** the dimension, in the radial direction, of a pallet (6) is substantially comprised between the fifth and the third of the radius (R) of the silo.

7. The device according to one of claims 2 to 6, **characterized in that** the shaft (3) is provided with a single pallet (6) per level and the pallets (6) of two successive levels are angularly shifted relatively to each other by an angle of about 90°.

8. The device according to one of the preceding claims, **characterized in that** the means capable of bringing the material from the upper portion of the peripheral area to the lower central portion of the silo (1) are of the static type and consist of a bottom (1a) with a frusto-conical shape.

9. The device according to one of claims 1 to 7, **characterized in that** the means capable of bringing the material from the upper portion of the peripheral area to the lower central portion of the silo (1) are of the dynamic type and consist of scraping elements (19), firmly secured to the rotary shaft (3), which are applied onto the internal wall of the base (1a) of the silo (1).

10. The device according to one of the preceding claims, **characterized in that** the silo (1) includes means (9) for loading through its upper portion.

11. The device according to one of claims 1 to 9, **characterized in that** the silo (1) includes means for loading through its lower portion, notably consisting of a worm screw (11).

12. The device according to claim 11, **characterized in that** the loading means may also act as unloading means.

13. The device according to one of the preceding claims, **characterized in that** the silo (1) is provided with thermal insulation means with respect to the outside.

14. The device according to claim 13, **characterized in that** the silo (1) is provided with heating means.

15. The device according to one of the preceding claims, **characterized in that** the silo (1) includes means (20) for introducing and/or extracting fluids.

16. A method for ensuring mixing of materials notably consisting of various divided solid wastes, in a vertical silo (1), **characterized in that** it includes the steps of:
- lifting the material from different successive levels (n₁, n₂, n₃... n₂₁) of a central area of the silo (1), and releasing it,
- bringing the material from the upper portion of the peripheral area of the silo to the lower central portion of the latter.

17. The method according to claim 16, **characterized in that** the silo is used as a reactor (1) in order to apply a physical and/or chemical treatment process therein.

18. The method according to claim 17, **characterized in that** the process is a process for making compost.

## Patentansprüche

1. Mischvorrichtung für Substanzen, die insbesondere gebildet sind durch verschiedene getrennte Festabfälle, in einem vertikalen Silo (1), **dadurch gekennzeichnet, dass** sie aufweist:
- eine mittlere Arbeitszone, die sich über die gesamte Höhe des Silos (1) erstreckt, und eine Umfangszone,
- Einrichtungen (6), die vertikal auf unterschiedlichen aufeinanderfolgenden Niveaus (n₁, n₂, n₃ ... n₂₁) der Arbeitszone über die gesamte Höhe des Silos (1) vertikal verteilt sind, und geeignet sind, die Substanz ausgehend von jedem der Niveaus der Arbeitszone anzuheben und diese freizugeben,
- Einrichtungen (1a, 19), die geeignet sind, die Substanz vom oberen Teil der Umfangszone zum unteren mittleren Teil des Silos (1) zu bringen.

2. Vorrichtung nach Anspruch 1, **dadurch gekennzeichnet, dass** das Silo (1) zylinderförmig ist, und die Arbeitszone gleichermaßen die Form eines zum Silo koaxialen Zylinders hat, wobei die Anhebeeinrichtungen durch eine vertikale Welle (3) gebildet sind, die mit der Achse des Silos (1) zusammenfällt und die zu einer Rotationsbewegung angetrieben wird und die auf jedem der Niveaus mit mindestens einem Flügel (6) versehen ist, dessen Radius (r) den Radius der Arbeitszone definiert und der einen Neigungswinkel (α) bezüglich der Querschnittebene (S) des Silos aufweist, wobei der Flügel (6) von unten nach oben geneigt ist sowie von der Seite, zu der hin die Rotationsbewegung führt, hin zur entgegengesetzten Seite von dieser.

3. Vorrichtung nach Anspruch 2, **dadurch gekennzeichnet, dass** die Drehgeschwindigkeit der Welle (3) in der Größenordnung von fünf bis zehn Umdrehungen pro Minute beträgt.

4. Vorrichtung nach einem der vorhergehenden Ansprüche, **dadurch gekennzeichnet, dass** die Flügel (6) durch ebene Elemente in Form von Kreissektoren von einem Mittelwinkel (δ) zwischen 20 und 120° gebildet sind.

5. Vorrichtung nach einem der Ansprüche 2 bis 4, **dadurch gekennzeichnet, dass** der Neigungswinkel (α) der Flügel (6) vom einstellbaren Typ ist,

6. Vorrichtung nach einem der Ansprüche 2 bis 5, **dadurch gekennzeichnet, dass** die Abmessung, in radialer Richtung, eines Flügels (6) im Wesentlichen zwischen einem Fünftel und einem Drittel des Radius (R) des Silos liegt.

7. Vorrichtung nach einem der Ansprüche 2 bis 6, **dadurch gekennzeichnet, dass** die Welle (3) mit einem einzigen Flügel (6) je Niveau versehen ist und die Flügel (6) von zwei aufeinanderfolgenden Niveaus winklig zueinander um einen Winkel von ca. 90° versetzt sind.

8. Vorrichtung nach einem der vorhergehenden Ansprüche, **dadurch gekennzeichnet, dass** die Einrichtungen, die geeignet sind, die Substanz vom oberen Teil der Umfangszone zum mittleren unteren Teil des Silos (1) zu bringen, vom statischen Typ sind und durch einen kegelförmigen Boden (1a) gebildet sind.

9. Vorrichtung nach einem der Ansprüche 1 bis 7, **dadurch gekennzeichnet, dass** die Einrichtungen, die geeignet sind, die Substanz von oberen Teil der Umfangszone zum unteren mittleren Teil des Silos (1) zu bringen, vom dynamischen Typ sind und durch Abstreiferelemente (19) gebildet sind, die mit der rotierenden Welle (3) fest verbunden sind und die an der Innenwand der Basis (1a) des Silos (1) anliegen.

10. Vorrichtung nach einem der vorhergehenden Ansprüche, **dadurch gekennzeichnet, dass** das Silo (1) Einrichtungen zur Beschickung (9) über seinen oberen Teil aufweist.

11. Vorrichtung nach einem der Ansprüche 1 bis 9, **dadurch gekennzeichnet, dass** das Silo (1) Einrichtungen zur Beschickung über seinen unteren Teil aufweist, die insbesondere durch eine Schnecke (11) gebildet sind.

12. Vorrichtung nach Anspruch 11, **dadurch gekennzeichnet, dass** die Einrichtungen zur Beschickung gleichermaßen als Entladeeinrichtungen fungieren können.

13. Vorrichtung nach einem der vorhergehenden Ansprüche, **dadurch gekennzeichnet, dass** das Silo (1) mit Einrichtungen zur thermischen Isolierung bezüglich des Äußeren versehen ist.

14. Vorrichtung nach Anspruch 13, **dadurch gekennzeichnet, dass** das Silo (1) mit Einrichtungen zur Beheizung versehen ist.

15. Vorrichtung nach einem der vorhergehenden Ansprüche, **dadurch gekennzeichnet, dass** das Silo (1) Einrichtungen zum Einbringen (20) und/oder zur Entnahme von Fluiden aufweist.

16. Verfahren zum Sicherstellen des Mischens von Substanzen, die insbesondere durch verschiedene getrennte Festabfälle gebildet sind, in einem vertikalen Silo (1), **dadurch gekennzeichnet, dass** es die folgenden Schritte beinhaltet:
- Anheben der Substanz ausgehend von unterschiedlichen aufeinanderfolgenden Niveaus (n₁, n₂, n₃ ... n₂₁) einer mittleren Zone des Silos (1), und Freigeben von dieser,
- die Substanz wird vom oberen Teil der Umfangszone des Silos zum unteren mittleren Teil von diesem gebracht.

17. Verfahren nach Anspruch 16, **dadurch gekennzeichnet, dass** man das Silo als Reaktor (1) verwendet, um in diesem mindestens ein Verfahren zur physikalischen und/oder chemischen Behandlung durchzuführen.

18. Verfahren nach Anspruch 17, **dadurch gekennzeichnet, dass** das Verfahren ein Verfahren zur Kompostherstellung ist.
